# NEUE EUROPÄISCHE PATENTSCHRIFT

(11) **EP 2 583 586 B2**
(45) Veröffentlichungstag und Bekanntmachung des Hinweises auf die Entscheidung über den Einspruch: **04.08.2021**
(45) Hinweis auf die Patenterteilung: 07.05.2014
(21) Anmeldenummer: 11185649.8
(22) Anmeldetag: 18.10.2011
(51) Int. Cl.: A47B 9/00, A47B 9/20

(54) **Vorrichtung zur Erfassung von Kollisionen und entsprechendes Verfahren**
Device for detecting collisions and method
Dispositif de détection de collisions et procédé associé

(43) Veröffentlichungstag der Anmeldung: 24.04.2013
(73) Patentinhaber: Kesseböhmer Produktions GmbH & Co. KG, 73235 Weilheim/Teck (DE)
(72) Erfinder: Strothmann, Thomas, 49565 Brahmsche (DE); Spahn, Oliver, 64367 Mühltal (DE)
(74) Vertreter: Prüfer & Partner mbB Patentanwälte · Rechtsanwälte

(56) Entgegenhaltungen:
- EP-A1- 1 891 872
- WO-A1-03/056976
- WO-A1-2011/083019
- AT-B- 410 626
- DE-A1-102007 030 473
- SE-C2- 516 479
- US-A1- 2009 134 966

## Beschreibung

Die Erfindung betrifft eine Vorrichtung und ein Verfahren zur Erkennung von Kollisionen bei Möbeln, und betrifft insbesondere eine Vorrichtung und ein Verfahren zur Erkennung von Kollisionen von automatisch bewegbaren Anteilen von Möbeln mit Hindernissen.

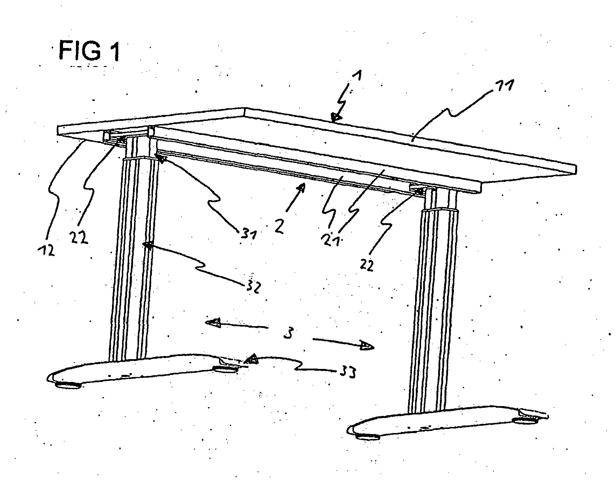

Aus dem Stand der Technik sind Möbel mit automatisch bewegbaren Anteilen wie beispielsweise Schreibtische mit einer automatisch höhenverstellbaren Tischplatte oder Schränke mit automatisch betätigten Türen bekannt. Hierbei sei mit "automatisch bewegbar" der Zustand bezeichnet, dass eine mögliche Bewegung von Anteilen von Möbeln in nicht-manueller Art angetrieben wird, beispielsweise durch einen Federmechanismus, einen hydraulischen oder pneumatischen Mechanismus oder ein motorbetriebenes Getriebe. Ein solcher, in Fig. 1 gezeigter Schreibtisch weist neben einer Tischplatte 1 und einem Trägergerüst 2 zwei Tischbeine 3 auf. Die Tischbeine sind teleskopartig ausgebildet und damit in der Länge veränderbar und sind mit dem Trägergerüst verbunden. Die Tischbeine beinhalten beispielsweise einen Elektromotor und eine Gewindestange zur automatischen Längenveränderung. Über eine nicht gezeigte Steuervorrichtung werden bei Betätigung eines nicht gezeigten Schalters durch einen Bediener die Elektromotoren betrieben, die Gewindestange rotiert und die Tischbeine werden je nach Rotationsrichtung teleskopartig verlängert oder verkürzt.

Die Steuervorrichtung hält die Elektromotoren an, wenn der Bediener den Schalter loslässt, den Schalter erneut oder einen weiteren Schalter betätigt, oder wenn eine maximale oder minimale Ausfahrstellung der Tischbeine erreicht wird. Da eine solche Tischplatte darauf ausgelegt ist, relativ hohe Lasten zu tragen, wie mehrere Monitore oder zahlreiche Bücher/Akten, sind die Mechanik und die Elektromotoren entsprechend leistungsfähig ausgelegt. Dies führt dazu, dass bei einer automatischen Höhenverstellung der Tischplatte relativ hohe Kräfte wirken. Als Bewegungsantrieb sind andere Mechanismen verwendbar, wie ein anders realisiertes elektrisch angetriebenes Getriebe, oder ein hydraulischer oder pneumatischer Mechanismus. Im Rahmen der Erfindung werden auch Geräte, wie beispielsweise automatisch im Tisch versenkbare Projektoren, Bildschirme oder dergleichen als bewegbare Anteile von Möbeln betrachtet.

Natürlich sind auch andere Möbel mit automatisch verstellbaren Bauteilen bekannt. Dies können Schränke mit bewegbaren Türen ebenso sein, wie höhenverstellbare Stühle oder Betten bzw. Bettkomponenten. Hier ist insbesondere auch an Bettelemente wie teilweise verstellbare Roste zu denken.

Bei der Verstellung, nun am Beispiel einer Höhenverstellung einer Tischplatte, kann es zu Beschädigungen am Tisch und dritten Gegenständen oder gar zu Verletzungen von Personen führen, die sich über- oder unterhalb der Tischplatte befinden, wenn es bei der Höhenverstellung zu einer Kollision zwischen Tischplatte und dem Gegenstand kommt. Um dies zu verhindern, werden Kollisionserkennungsvorrichtungen eingesetzt, die eine Kollision der Tischplatte mit einem Hindernis über einen oder mehrere Sensoren erfassen und an die Steuervorrichtung melden, die daraufhin den Betrieb der Elektromotoren anhält.

Aus EP 1 460 914 B1 ist eine Vorrichtung mit verstellbaren Elementen bekannt, wobei in der Vorrichtung ein piezoelektrischer Sensor vorgesehen ist, der im Falle einer erfassten Kollision ein entsprechendes Steuersignal zum Stoppen oder Umkehren der Bewegung auslöst.

Piezoelemente sind jedoch nicht ideal für die Anwendung in derartigen Gegenständen. Zum einen ist eine relativ komplizierte Elektronik notwendig, um die erzeugten Signale zunächst zu verstärken und dann auszulesen. Zum anderen eignen sich die in der EP 1 460 914 B1 beschriebenen Piezosensoren nicht für Messungen einer Kollision beim Starten der Bewegung, da eine absolute Messung der Belastung nicht gemessen werden kann. Aufgrund der physikalischen Eigenschaften des Piezoelements kommt es während einer Verformung zu einer Ladungsverschiebung. Diese erzeugt ein Signal. Sobald die Verformung stoppt, wird auch das Signal gestoppt. Aufgrund der angeschlossenen Elektronik und der physikalischen Eigenschaften fließen in diesem statischen Zustand jedoch trotzdem Ladungen ab. So kann es bei einem erneuten Messen ggf. zu Fehlmessungen kommen, die die Zuverlässigkeit des Kollisionsschutzes beeinträchtigen können. Zumindest können auf diese Weise keine permanenten, statischen Belastungen erfasst werden.

Die WO 2011/083019 A1 offenbart ferner eine Vorrichtung zum Erkennen von Kollisionen mittels eines Dehnungsmessstreifens. Diese bringen jedoch den Nachteil mit sich, dass Dehnungsmessstreifen für gewöhnlich erst auf zusätzliche Bauteile, wie beispielsweise Stahlplatten, die die einwirkende Kraft in eine dehnende Verformung konvertieren, aufgebracht werden müssen, was neben den Mehrkosten auch mit einem höheren baulichen Aufwand verbunden ist.

Es ist daher Aufgabe der Erfindung, ein Möbelstück mit einem Kollisionsschutz zur Verfügung zu stellen, der zumindest einen Nachteil gegenüber dem Stand der Technik vermeidet und der eine zuverlässige Kollisionsmessung ermöglicht.

Diese Aufgabe wird mit einer Möbelsäule gemäß Anspruch 1 bzw. einem Möbel nach Anspruch 14 gelöst. Vorteilhafte Weiterbildungen sind Gegenstand der Unteransprüche.

Für die folgenden Erklärungen ist zu beachten, dass sich die Ausführungen stets auch auf eine Möbelsäule beziehen, auch wenn lediglich von einem Möbel die Rede ist. Eine Möbelsäule, wie sie von dem Schutzumfang hier umfasst sein soll, beinhaltet auch diejenigen Strukturen, die beispielsweise an Schränken und/oder deren Scharniere vorzusehen sind, um eine automatische Verstellung dieser Komponenten zu ermöglichen. Selbiges gilt beispielsweise für Sessel oder Komponenten von Betten oder Bettgestellen.

Ein Möbelstück kann mindestens einen automatisch bzw. motorisch bewegbaren Anteil aufweisen, der daran angepasst ist, relativ zu dem restlichen Möbelstück nicht-manuell bewegt zu werden. Ein derartiges Möbelstück weist eine Vorrichtung zur Erkennung von Kollisionen mit Hindernissen auf, sowie einen automatischen Vortriebsmechanismus, der den bewegbaren Anteil bewegt, und eine Steuereinrichtung, die den automatischen Vortriebsmechanismus steuert. Weiterhin ist mindestens ein Sensor in dem Möbel enthalten, der eine Kollision bei der Bewegung des bewegbaren Anteils mit einem Hindernis erfassen und an die Steuerung übermitteln kann. Erfindungsgemäß handelt es sich um einen kraftempfindlichen Sensor, genauer um einen drucckraftempfindlichen Sensor (beispielsweise ein sog. "force sensing resistor" kurz FSR^{®} der Firma Interlink Electronics, Inc.), auf den eine Druckkraft direkt ausgeübt wird. Während der Kraftempfindliche Sensor üblicherweise als ein Widerstand ausgebildet ist, ist es jedoch auch denkbar, dass dieser Sensor die Änderung einer Kapazität, Induktivität, magnetischer Eigenschaften oder andere physikalischen Größen erfasst.

Ein in der Erfindung verwendeter FSR zeichnet sich durch einen mehrlagigen, insbesondere zweilagigen Aufbau aus. Es handelt sich dabei um Polymerfilme, die, abhängig von der gegenseitigen Kontaktfläche den elektrischen Widerstand des FSR verändern. Generell gilt, dass eine größere Berührungsfläche, die in der Regel mit einem größeren auf den FSR wirkenden Druck einhergeht, einen geringeren Widerstand des FSR zur Folge hat. Darin weist eine erste Schicht leitfähige Leiterbahnen auf, die mit verschiedenen Elektroden verbunden sein können. Die Leiterbahnen sind dabei beabstandet voneinander angeordnet, beispielsweise kammförmig ineinander greifend. Eine zweite Schicht des FSR weist eine Matrix aus leitfähigen und nicht-leitfähigen Komponenten (eine halbleitende Paste) auf. Die zweite Leiterschicht ist in einem unbelasteten Zustand des FSR isoliert, beispielsweise beabstandet, von der ersten Schicht angeordnet. Durch Zusammendrücken des FSR wird der Abstand der Schichten zueinander verringert bzw. der Kontakt der Schichten miteinander erhöht. Abhängig von dem ausgeübten Druck bzw. der ausgeübten Kraft, wird die halbleitende Paste der zweiten Schicht zwischen die Leiterbahnen der ersten Schicht gepresst und bildet eine leitfähige Verbindung zwischen den Leiterbahnen. Dadurch verringert sich der Widerstand des FSR. So kann beispielsweise ein Widerstand des FSR zwischen 10 - 100 kΩ erreicht werden. Die Leitfähigkeit des Kraftempfindlichen Sensors verläuft proportional zu der Drucckraft, die auf den Kraftempfindlichen Sensor ausgeübt wird. Es kann auch nur eine Leiterbahn auf der ersten Schicht vorgesehen sein, wobei die leitfähige Paste der zweiten Schicht in diesem Fall mit einer Elektrode verbunden ist. Abhängig von dem geplanten Einsatz des FSR können auch mehr als zwei Leiterbahnen vorgesehen sein. Der Widerstand als eine hier zu erfassende Größe wird dabei von einer angeschlossenen Elektronik gemessen.

Durch die Verwendung eines derartigen FSR kann sowohl eine Kollision bei der Bewegung des bewegbaren Anteils mit einem Hindernis erfasst werden, als auch eine Belastung des Möbels, sei es durch die Beschleunigung bei der Bewegung oder einer ständigen Belastung durch auf dem Möbel angeordnete Gegenstände.

Dies ist möglich durch den speziellen Aufbau eines FSR mit zwei Schichten wie oben beschrieben, wobei eine der Schichten eine leitfähige Beschichtung aufweist, die, wenn sie beispielsweise durch eine Drucckraft in Kontakt mit der zweiten, davon geringfügig beabstandeten Schicht gebracht wird, eine Veränderung der Leitfähigkeit erfährt. Die Leitfähigkeit bzw. der Widerstand korreliert dabei mit dem auf den FSR ausgeübten Druck und somit auch mit der wirkenden Kraft.

Der FSR kann insbesondere axial über dem antreibenden Motor angebracht sein, um eine direkte Kraftwirkung zu erfahren. Zudem kann auf diese Weise der Abstand zum Motor gering gehalten werden, was bauliche Vorteile mit sich bringen kann.

Weiterhin kann an dem Möbel an einer dem FSR zugewandten Seiten und in dessen Wirkreichweite ein Betätigungsbauteil ausgebildet sein, das bei einer Kollision in Wirkkontakt mit dem FSR gerät und somit wie oben beschrieben eine Leitfähigkeitsänderung in dem FSR bewirkt.

Dieses Betätigungsbauteil kann beispielsweise aus einem Schaumstoffmaterial hergestellt sein, das insbesondere auch ein spritzfähiges Schaumstoffmaterial sein kann. Alternativ oder zusätzlich kann das Betätigungsbauteil auch ein Elastomer aufweisen. Dieses Elastomer kann ebenso spritzbar vorgesehen sein. Das Betätigungsbauteil kann dabei den gesamten FSR oder nur einen Teilbereich des FSR kontaktieren.

Dabei ist insbesondere vorstellbar, dass das Betätigungsbauteil einen Betätigungsvorsprung aufweist, der beispielsweise konisch von dem Betätigungsbauteil hervorragt und so einen für verschiedene Krafteinwirkungen vordefinierten Berührungsbereich auf dem FSR aufweist. Auch ist denkbar, dass der Betätigungsvorsprung ein stufenförmiges Profil aufweist. Abhängig von dem auf den FSR wirkenden Druck werden so verschiedene Leitfähigkeiten des FSR erreicht, was ein Auslesen der Belastung und ein Identifizieren von Kollisionen oder Überlastungen vereinfachen kann. Natürlich sind auch andere Formen möglich.

Dabei ist zu beachten, dass in dem Möbel wenigstens ein Sensor, möglicherweise jedoch eine Mehrzahl von Sensoren vorgesehen ist. Wenigstens einer der in dem Möbel vorgesehenen Sensoren kann dabei derart angeordnet sein, dass im Falle einer Kollision eine Drucckraft auf den FSR wirkt. Es ist auch denkbar, dass ein Sensor derart angeordnet ist, dass im Falle einer Kollision des bewegbaren Anteils des Möbels eine Zugkraft auf einen FSR ausgeübt wird.

In dem ersten, oben geschilderten Fall ist eine Kollision beispielsweise einer Tischoberfläche beim Auffahren des Tisches mit einem Hindernis wie einem offenen Fenster oder einem Regal, vorstellbar. Hier würde ein weiteres Auffahren der Säule gegen den Widerstand der kollidierten Platte eine Druckkraft auf den FSR ausüben, was ab einem bestimmten, vordefinierten Schwellenwert zu einem entsprechenden Signal an die Steuereinrichtung führt.

In dem anderen Fall ist es denkbar, dass beim Herabfahren des Tisches die Tischplatte an unter dem Tisch befindliche Gegenstände anstößt und somit der bewegbare Anteil des Möbels relativ zu dessen Bewegungsrichtung ins Stocken gerät. Dadurch wird folglich eine Zugkraft aufgrund der Relativbewegung zwischen verschiedenen Komponenten des bewegbaren Anteils, beispielsweise einer Tischplatte und einem mit dem Motor verbundenen Bewegungselement verursacht. Wenn der FSR mit beiden Komponenten gekoppelt ist, wird hier die Zugkraft auch auf den FSR ausgeübt und es kann ein Signal ausgelöst werden.

Auch kann zur besseren Erfassung wenigstens einer der Sensoren beziehungsweise der eine Sensor bereits in einem kollisionsfreien Zustand des Möbels mit einer Druckkraft vorbeaufschlagt sein, was mit einer spezifischen Leitfähigkeit des FSR einhergeht, die von der Vorrichtung zur Erkennung von Kollisionen als Ausgangswert erfasst werden kann. So kann eine Erhöhung der Kraft wie auch eine Verringerung der Kraft zu einer Signalauslösung führen.

Ein Verfahren zur Steuerung der automatischen Bewegung eines bewegbaren Anteils in einem Möbel weist entsprechend die Schritte auf: Ausmessen eines Widerstands des Kraftempfindlichen Sensors bzw. des Sensorsignals, Erfassen einer Kraft, insbesondere einer Druckkraft auf den FSR in dem Sensor im Falle einer Kollision des Möbels mit einem Hindernis und/oder Erfassen einer Belastung des Möbelstücks, sei es im Falle einer Kollision oder im statischen - also unbewegten - Zustand, Senden eines Kollisionssignals bzw. eines Überlastungssignals an die Steuereinrichtung und Stoppen einer Bewegung im Falle einer automatisch gesteuerten Bewegung des bewegbaren Anteils durch die Steuereinrichtung und/oder Auslösen eines Warnsignals im Falle einer Überladung des Möbels, auch im statischen Zustand. Zudem ist in weiteren Ausführungsformen auch denkbar, dass bei dem Erfassen einer Überladung des Möbelstücks eine Bewegung nicht ausgelöst wird, z.B. weil ein Steuersignal zum Verstellen des bewegbaren Anteils gar nicht erst ausgegeben wird. So kann eine Beschädigung des Motors durch Überlastung vermieden werden.

Ein Sensor zur Verwendung in einem Möbel weist dabei einen FSR wie beschrieben auf. Dieser Sensor kann entsprechend als Kollisionssensor und/oder als ein relativer - also während der Bewegung - oder ein absoluter - also im statischen Zustand - Gewichtssensor in dem Möbel vorgesehen sein. So kann erreicht werden, dass die Gefahr einer Überlastung des Motors, insbesondere beim Anfahren verringert wird.

Einzelheiten, weitere Vorteile und Weiterentwicklungen der Erfindung werden anhand von Ausführungsbeispielen unter Bezugnahme auf die Zeichnungen näher erläutert. Dabei zeigt:
- Fig. 1: eine Schrägansicht eines automatisch höhenverstellbaren Tisches wie aus dem Stand der Technik bekannt;
- Fig. 2: eine Ausschnittsansicht mit einer Sensoranbringungsstelle innerhalb eines Tischbeins gemäß einer Ausführungsform der Erfindung;
- Fig. 3: eine Ausschnittsansicht mit einer Sensoranbringungsstelle außerhalb eines Tischbeins gemäß einer weiteren Ausführungsform der Erfindung;
- Fig. 4: eine bewegbare Säule mit einem erfindungsgemäßen Sensor gemäß einer Ausführungsform der Erfindung a) als Gesamtansicht der Säule, b) in Detailansicht eines Teilbereichs der Säule;
- Fig. 5: eine perspektivische Explosionsdarstellung eines erfindungsgemäßen Sensors in einer bewegbaren Säule von schräg oben;
- Fig. 6: eine perspektivische Explosionsdarstellung eines erfindungsgemäßen Sensors in einer bewegbaren Säule von schräg unten.

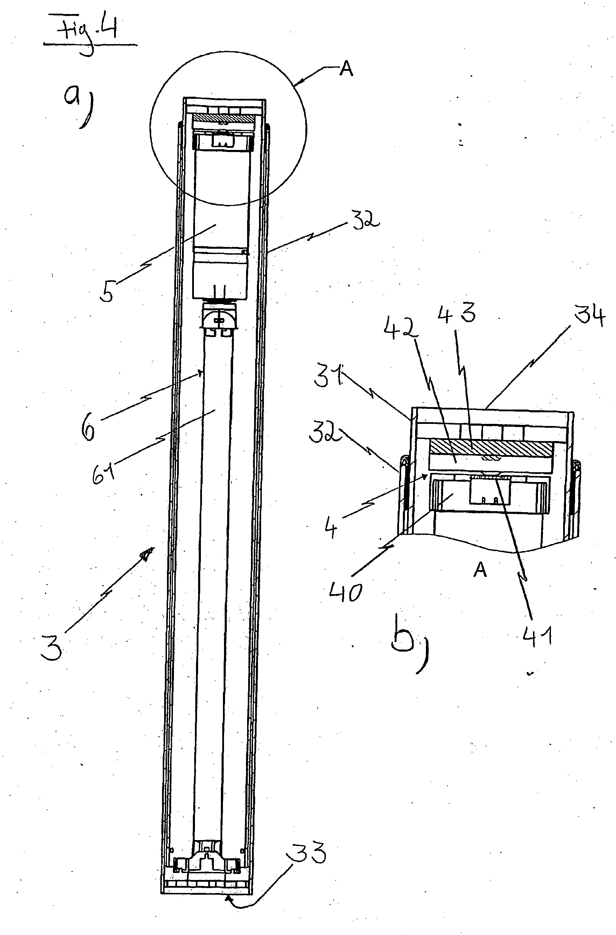

Fig. 1 zeigt als Beispiel für ein Möbelstück einen automatisch höhenverstellbaren Tisch mit einer Tischplatte 1, die eine Vorderkante 11 und eine Rückkante 12 aufweist. Die Tischplatte 1 ist auf einem Trägergerüst 2 befestigt, das aus einem vorderen und einem hinteren Vierkantträger 21 und einer rechten und einer linken Trägerplatte 22 besteht. Die Trägerplatten 22 sind jeweils mit Tischbeinen 3 verbunden. Ein Tischbein besteht aus einem inneren Tischbeinbauteil 31, das an seinem oberen Ende mit der Trägerplatte 22 verbunden ist, und einem äußeren Tischbeinbauteil 32, die so ineinander angeordnet sind, dass das Tischbein 3 teleskopartig in der Länge veränderbar ist. Am unteren Ende des äußeren Bauteils 32 ist senkrecht dazu ein Fußbauteil 33 angeordnet. Innerhalb des inneren Tischbeinbauteils 31 sind ein Motor, vorzugsweise ein Elektromotor 5, und ein nicht gezeigtes Spindelgetriebe mit Gewindestange 6 (vgl. Fig. 4) angebracht.

Die Elektromotoren 5 beider Tischbeine 3 werden durch eine nicht gezeigte Steuervorrichtung betrieben und sind daran angepasst, die Gewindestange 6 zu rotieren und so eine automatische Längenveränderung der Tischbeine 3 vorzunehmen. Dies wird im Folgenden noch detaillierter beschrieben werden. Die Steuervorrichtung ist mit jeweils einem Schalter zur Anwahl einer Aufwärtsbewegung und einer Abwärtsbewegung der Tischplatte 1 verbunden.

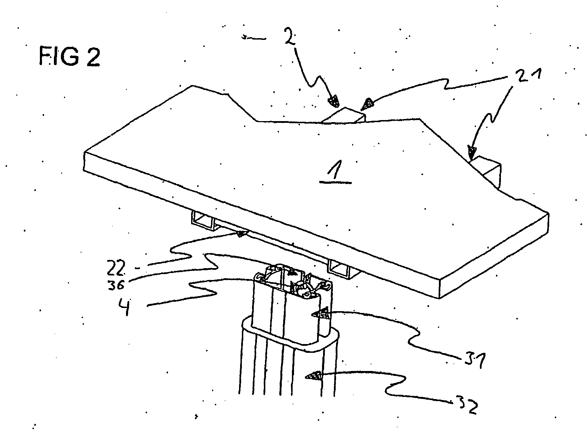

Wie in Fig. 2 gezeigt ist, befindet sich in der hier gezeigten Ausführungsform ein Sensor 4 an dem oberen Ende des hohlen inneren Tischbeinbauteils 31 in einer von dem der Tischplatte 1 zugewandten Ende des inneren Tischbeinbauteils zurückgesetzten Position. Der von dem Ende des inneren Tischbeinbauteils 31 zurückgesetzte Sensor 4 ist hier zur besseren Übersicht in einer winkeligen Anordnung dargestellt. Vorzugsweise ist der Sensor 4 in dieser wie auch in den folgenden beschriebenen Ausführungsformen derart in dem inneren Tischbeinbauteil 31 angeordnet, dass eine Achse entlang der Erstreckungsrichtung des Tischbeins 3 senkrecht zu der Sensorfläche des Sensors 4 steht.

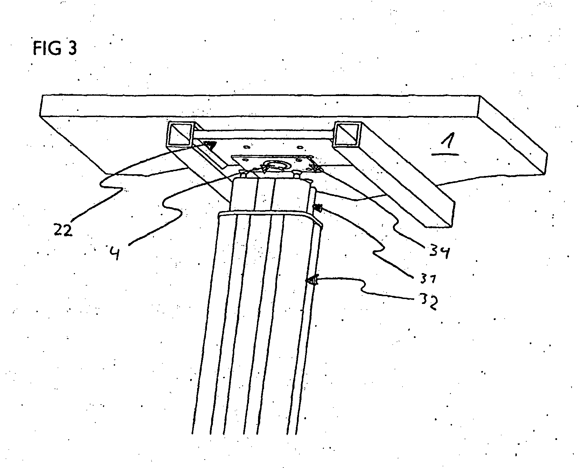

In einer anderen Ausführungsform, wie sie in Fig. 3 gezeigt ist, befindet sich der Sensor 4 an dem oberen Ende des inneren Tischbeinbauteils 31, zwischen dem inneren Tischbeinbauteil 31 und der Tischplatte 1. Dabei ist zwischen dem Sensor 4 und der Tischplatte 1 hier noch eine Zusatzplatte 34 vorgesehen. Die Zusatzplatte 34 dient der Kontaktierung mit dem Sensor 4 im Falle einer Kollision des bewegbaren Anteils, hier also der Tischplatte 1, mit einem Hindernis. Der Sensor 4 kann auch direkt an der Tischplatte 1 oder an der Trägerplatte 22 befestigt sein, solange eine Kollision der Tischplatte 1 mit einem Hindernis zu einer Krafteinwirkung bzw. Kraftänderung auf den Sensor 4 führt.

Insbesondere ist auch vorstellbar, dass ein Sensor 4 derart angebracht ist, dass eine Kollision bei der Auffahrbewegung der Tischplatte 1 zu einer Krafteinwirkung auf den Sensor 4 führt, da die Gewindespindel das innere Tischbeinbauteil 31 und somit auch den Sensor 4 weiter in Richtung der kollidierenden Tischplatte 1 drängt, bis ein Schwellenwert des Widerstands des Sensors erreicht wird, der ein Stoppen der Auffahrbewegung bewirkt. Ein weiterer Sensor 4 kann derart angebracht sein, dass er bereits mit einer vorbestimmten Krafteinwirkung zwischen dem inneren Tischbeinbauteil 31 und der Tischplatte 1 angebracht ist. Im Falle einer Kollision beim Herabfahren der Tischplatte 1 mit einem Hindernis, dass sich entsprechend unterhalb der Tischplatte befindet, würde der Motor bzw. die Gewindespindel das innere Tischbeinbauteil 31 weiter von der Tischplatte 1 ziehen, so dass eine Zugkraft auf den Sensor 4 wirkt, die der vorbestimmten Druckkraft entgegenwirkt und wiederum zu einer Widerstandsänderung des Sensors 4 führt.

Fig. 4a zeigt ein komplettes Tischbein 3 in einem eingefahrenen Zustand des inneren Tischbeinbauteils 31. Wie insbesondere aus der Detailansicht aus Fig. 4 b) hervorgeht, ist der Sensor 4 in einer Position axial oberhalb des Elektromotors 5, also in einer Richtung vom Elektromotor 5 hin zu der Zwischenplatte 34, innerhalb des inneren Tischbeinbauteils 31 angeordnet. Der Elektromotor 5 ist dabei ebenfalls im Inneren des inneren Tischbeinbauteils 31 und im Bereich eines oberen Endes des inneren Tischbeinbauteils 31 angeordnet. In einer Richtung von dem Elektromotor 5 zu dem in Fig. 4 nicht gezeigten Fußbauteil 33 erstreckt sich die Gewindestange 6, die eine Kopplung zwischen dem Motor und somit dem inneren Tischbeinbauteil 31 sowie dem äußeren Tischbeinbauteil 32 schafft.

Die Gewindestange 6 weist eine Welle (nicht gezeigt), die in Figur 4 innerhalb des Bauteils 6 angeordnet ist, sowie eine Wellenumhüllung 61 auf. Die Welle ist mit dem Motor verbunden, während die Wellenumhüllung 61 der Gewindestande 6 an einer dem Fußbauteil 33 zugewandten Seite mit dem Fußbauteil 33 und/oder mit dem äußeren Tischbeinbauteil 32 verbunden ist. Die Welle und die Wellenumhüllung 61 sind miteinander über ein Gewinde in Eingriff (nicht gezeigt). Eine Rotation der Welle bewirkt dann durch die Kopplung der Gewindestange 6 bzw, der Wellenumhüllung 61 mit den Tischbeinbauteilen 31, 32eine Verschiebung des Motors in vertikaler, axialer Richtung, abhängig von der Drehrichtung - der Welle in Richtung des Fußbauteils 33 oder in eine dem Fußbauteil 33 abgewandte Richtung. Durch die Kopplung des Elektromotors 5 mit dem inneren Tischbeinbauteil 31 erfährt das innere Tischbeinbauteil 31 eine Relativbewegung zu dem äußeren Tischbeinbauteil 32. Das Tischbein 3 wird somit teleskopartig verfahren und es wird eine Höhenverstellung des inneren Tischbeinbauteils 31 relativ zu dem äußeren Tischbeinbauteil 32 hergestellt.

Es ist natürlich auch denkbar, dass andere Arten der Kopplung des inneren Tischbeinbauteils 31 mit dem äußeren Tischbeinbauteil 32 verwendet werden. So ist auch vorstellbar, dass Seilzüge eingesetzt werden oder Koppelelemente verwendet werden, die eine entsprechende Kopplung der relativ zueinander bewegbaren Elemente herstellen. Zudem ist denkbar, dass der Motor an einer anderen Position, beispielsweise im Bereich des Fußbauteils angeordnet ist, oder dass mehr als ein Motor und/oder mehr als zwei Tischbeinbauteile verwendet werden.

Wie weiter in Fig. 4 zu sehen ist, weist der in dieser Ausführungsform vorgesehene Sensor 4 einen Kraftempfindlichen Sensor (im Folgenden auch gemäß dem bevorzugt verwendeten Sensor als FSR bezeichnet) 41 auf. Der FSR 41 ist oberhalb des Elektromotors 5 in einer Sensorfassung 40 angeordnet. Die Sensorfassung 40 ist dabei so ausgebildet, dass sie in dem inneren Tischbeinbauteil 31 und oberhalb des Elektromotors 5 angeordnet ist. Der FSR 41 hat einen Messabschnitt und einen Kopplungsabschnitt. Der Messabschnitt ist vorliegend im Wesentlichen eine runde Fläche, auf die der Druck zum Ändern des Widerstands aufzubringen ist. Der Kopplungsabschnitt, auch als Schwanz bezeichnet, ist eine verdrahtete Zuleitung, die zur Kopplung des FSR 41 an die dahintergeschaltete Elektronik dient. Es ist zu beachten, dass die Form des FSR 41 zwar Einfluss auf seine elektrische Leitfähigkeit hat, in der vorliegenden Erfindung jedoch auch FSR mit anderen Formen als beschrieben eingesetzt werden können. Insbesondere können FSR mit rechteckiger Form oder unregelmäßiger Form eingesetzt werden. Auch ist es denkbar, dass mehrere FSR eingesetzt werden, oder ein FSR derart ausgebildet ist, dass es mehrere Kontaktflächen mit den Druckausübenden Bauteilen gibt.

Oberhalb des FSR 41, also auf einer dem Elektromotor 5 abgewandten Seite des FSR 41, ist ein Dämpfungselement 42 vorgesehen. Das Dämpfungselement 42 weist vorzugsweise einen Schall- bzw. Vibrationsdämpfenden Werkstoff, wie beispielsweise Gummi oder Schaumstoff, auf. Das Dämpfungselement 42 ist hier in Wirkreichweite, aber kontaktfrei von dem FSR 41 angeordnet. In alternativen Ausführungsformen kann das Dämpfungselement 42 auch im Kontakt, insbesondere mit einer definierten Vorbelastung, mit dem FSR 41 ausgebildet sein.

Wiederum oberhalb des Dämpfungselements 42 ist ein Betätigungsbauteil 43 angeordnet. Das Betätigungsbauteil 43 kann insbesondere eine Platte sein, die aus Stahl und/oder Kunststoff besteht. Sowohl das Dämpfungselement 42 als auch das Betätigungsbauteil 43 weisen eine runde Bauweise auf und lassen sich in den Hohlraum des inneren Tischbeinbauteils 31 einbringen. Das Betätigungsbauteil 43 ist dabei in Kontakt mit der Zwischenplatte 34, der Trägerplatte 22 oder direkt mit der Tischplatte 1 vorgesehen (nicht gezeigt).

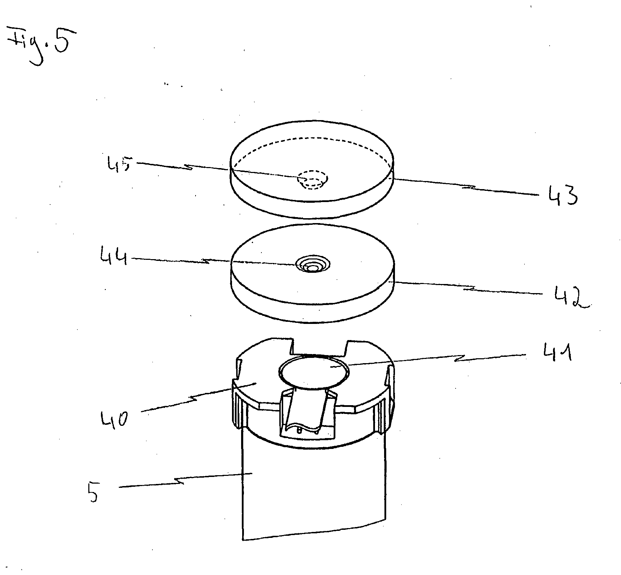

In einer bevorzugten Ausführungsform der Erfindung weist das Betätigungsbauteil 43 einen Betätigungsvorsprung, hier eine einzelne Noppe 45, auf, wie auch aus Fig. 5 ersichtlich ist. In der gezeigten Ausführungsform ist diese Noppe 45 um den Mittelpunkt des Betätigungsbauteils 43 angeordnet. In alternativen Ausführungsformen kann auch eine Mehrzahl von Betätigungsvorsprüngen an dem Betätigungsbauteil vorgesehen sein. Die Noppe 45 erstreckt sich von der dem FSR 41 zugewandten Seite des Betätigungsbauteils 43 in Richtung zu dem FSR 41. In der gezeigten Ausführung ist die Noppe 45 ein konischer Vorsprung. In anderen Ausführungen kann die Noppe auch ein Stufenprofil oder eine andere, beliebige Form haben.

Korrespondierend und vorzugsweise formschlüssig mit der Noppe 45 des Betätigungsbauteils 43 weist das Dämpfungselement 42 eine Ausbuchtung 44 auf, in die sich die Noppe 45 in zusammengesetztem Zustand des Sensors 4 erstreckt. Es ist auch denkbar, dass das Dämpfungselement 42 keine Ausbuchtung aufweist und sich die Noppe 45 allein aufgrund ihrer Materialeigenschaften in das Dämpfungselement 42 erstrecken bzw. eindrücken kann. Dies gilt insbesondere für sehr weiche Dämpfungselemente und/oder sehr harte Betätigungsbauteile. Wenn das Betätigungsbauteil mit einer Mehrzahl von Noppen ausgebildet ist, so kann das Dämpfungselement analog mit einer Mehrzahl von Ausbuchtungen ausgebildet werden.

Der FSR 41 des Sensors 4 ist zentriert in der Sensorfassung 40 angeordnet. Dabei werden das Dämpfungselement 42 und das Betätigungsbauteil 43 derart über dem FSR angeordnet, dass die Noppe 45 zumindest im Falle einer Kollision des Tisches eine Druckkraft auf den FSR 41 ausübt. Das bedeutet, der FSR 41, die Ausbuchtung 44 und die Noppe 45 sind in einer axialen Richtung in Wirkreichweite übereinander angeordnet.

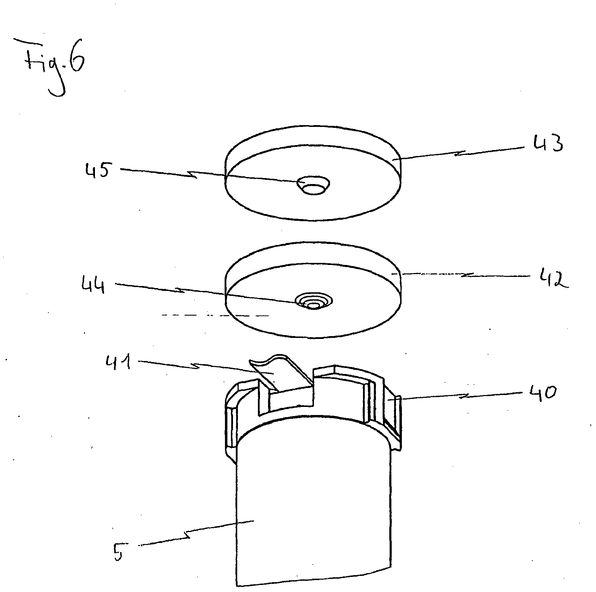

Fig. 6 zeigt die aus Fig. 5 beschriebene Anordnung erneut aus einer Perspektive von schräg unten. Hier ist zu erkennen, dass die Ausbuchtung 44 ein Hinein- bzw. Hindurchragen der Noppe 45 bis hin zu dem FSR 41 ermöglicht. Das Dämpfungsmittel kann auch mit einem oder mehreren zu den Noppen korrespondierenden Löchern ausgebildet sein.

Es ist alternativ auch denkbar, dass das Dämpfungselement 42 aus einem Material hergestellt ist, dass eine Schwingungsübertragung von dem bewegbaren Anteil auf den feststehenden Anteil dämpft, aber gleichzeitig im Falle einer Kollision eine Druckbelastung auf den FSR überträgt. In diesem Fall kann auf das Betätigungselement verzichtet werden.

Zusammenfassend ist eine Säule für ein Möbelstück und ein Möbelstück beschrieben, mit mindestens einem automatisch bewegbaren Anteil 1, 2, 31, wobei dieser Anteil daran angepasst ist, relativ zu dem restlichen Möbel nicht-manuell bewegt zu werden. Dabei ist eine Vorrichtung zur Erkennung von Kollisionen des automatisch bewegbaren Anteils mit Hindernissen, ein automatischer Vortriebsmechanismus 5, 6, der daran angepasst ist, den bewegbaren Anteil zu bewegen, eine Steuereinrichtung, die daran angepasst ist, den automatischen Vortriebsmechanismus 5, 6 zu steuern, und mindestens ein Sensor 4 vorgesehen, der daran angepasst ist, eine Kollision bei der Bewegung des bewegbaren Anteils 1, 2, 31 mit einem Hindernis zu erfassen und an die Steuerung zu übermitteln wobei der mindestens eine Sensor 4 einen Kraftempfindlichen Sensor 41 aufweist.

## Patentansprüche

1. Möbelsäule mit mindestens einem motorisch bewegbaren Anteil (1, 2, 31), der relativ zu dem restlichen Möbel bewegbar ist, aufweisend: eine Vorrichtung zur Erkennung von Kollisionen des bewegbaren Anteils (1, 2, 31) mit Hindernissen, einen automatischen Vortriebsmechanismus, der daran angepasst ist, den bewegbaren Anteil zu bewegen, eine Steuereinrichtung, die daran angepasst ist, den automatischen Vortriebsmechanismus zu steuern, und mindestens einen Sensor (4), der daran angepasst ist, eine Kollision bei der Bewegung des bewegbaren Anteils (1, 2, 31) mit einem Hindernis zu erfassen und an die Steuerung zu übermitteln, **dadurch gekennzeichnet dass** der mindestens eine Sensor einen Kraftempfindlichen Sensor (41) aufweist, wobei ein Steuersignal abhängig von einem Leitfähigkeitswert des Kraftempfindlichen Sensors erzeugbar ist, wobei
der Kraftempfindliche Sensor zumindest eine Leiterschicht und eine Matrix aus leitendem und nicht leitendem Material aufweist.

2. Möbelsäule nach Anspruch 1, wobei der Kraftempfindliche Sensor derart ausgebildet ist, dass sich die Leitfähigkeit des Kraftempfindlichen Sensors proportional zu einer auf den Kraftempfindlichen Sensor wirkenden Druckkraft verhält.

3. Möbelsäule nach Anspruch 1, wobei der Kraftempfindliche Sensor axial über dem Motor (5) angeordnet ist.

4. Möbelsäule nach einem der vorhergehenden Ansprüche, wobei an dem Möbel ein Betätigungsbauteil in Wirkreichweite mit dem Kraftempfindlichen Sensor vorgesehen ist.

5. Möbelsäule nach Anspruch 4, wobei das Betätigungsbauteil (43) ein Schaumstoffmaterial und/oder ein Elastomer aufweist.

6. Möbelsäule nach Anspruch 5, wobei das Schaumstoffmaterial und/oder das Elastomer spritzbar ist.

7. Möbelsäule nach einem der Ansprüche 4 bis 6, wobei das Betätigungsbauteil (43) einen Betätigungsvorsprung (45) aufweist.

8. Möbelsäule gemäß Anspruch 7, wobei der Betätigungsvorsprung (45) eine konische Form aufweist.

9. Möbelsäule nach einem der vorhergehenden Ansprüche, wobei mindestens ein Sensor (4) derart angeordnet ist, dass im Falle einer Kollision eine Druckkraft auf den Kraftempfindlichen Sensor (41) wirkt.

10. Möbelsäule nach einem der vorhergehenden Ansprüche, wobei mindestens ein Sensor (4) derart angeordnet ist, dass im Falle einer Kollision eine Zugkraft auf den Kraftempfindlichen Sensor (41) wirkt.

11. Möbelsäule nach einem der vorhergehenden Ansprüche, wobei mindestens einer der Sensoren (4) in einem kollisionsfreien Zustand mit einer Druckkraft vorbeaufschlagt ist.

12. Verfahren zur Steuerung der automatischen Bewegung des bewegbaren Anteils in einer Möbelsäule gemäß einem der vorhergehenden Ansprüche, das die Schritte aufweist:
- Ausmessen des Widerstandes des Kraftempfindlichen Sensors;
- Erfassen einer Druckkraft auf den Kraftempfindlichen Sensor in dem Sensor im Fälle einer Kollision des Möbels mit einem Hindernis;
- Senden eines Kollisionssignals an die Steuereinrichtung;
- Stoppen der Bewegung des bewegbaren Anteils durch die Steuereinrichtung.

13. Verfahren zur Steuerung der automatischen Bewegung des bewegbaren Anteils gemäß Anspruch 12, das den Schritt aufweist:
- Umkehren der Bewegungsrichtung des bewegbaren Anteils für eine bestimmte Zeit und/oder Wegstrecke nach dem Erfassen einer Kollision.

14. Möbel mit mindestens einer Möbelsäule gemäß einem der Ansprüche 1 bis 11.

## Claims

1. Furniture column with at least one portion (1, 2, 31) movable in a motorised manner which is movable relative to the residual furniture, comprising:
a device for detecting collisions of the movable portion (1, 2, 31) with obstacles,
an automatic propulsion mechanism adapted to move the movable portion,
a control device adapted to control the automatic propulsion mechanism, and
at least one sensor (4) adapted to detect a collision with an obstacle during the motion of the movable portion (1, 2, 31) and to transmit it to the control device,
**characterized in that**
the at least one sensor comprises a force-sensitive sensor (41), wherein a control signal can be generated depending on conductivity value of the force-sensitive sensor, wherein
the force-sensitive sensor comprises at least one conductor layer and a matrix of conductive and non-conductive material.

2. Furniture column according to claim 1, wherein the force-sensitive sensor is formed such that the conductivity of the force-sensitive sensor behaves proportional to a compression force acting onto the force-sensitive sensor.

3. Furniture column according to claim 1, wherein the force-sensitive sensor is arranged axially above the motor (5).

4. Furniture column according to anyone of the preceding claims, wherein an operating element is arranged at the furniture in a range of function with the force-sensitive sensor.

5. Furniture column according to claim 4, wherein the operating element (43) comprises a foamed material and/or an elastomer.

6. Furniture column according to claim 5, wherein the foamed material and or the elastomer are injection-mouldable.

7. Furniture column according to anyone of the claims 4 to 6, wherein the operating element (43) comprises an operating protrusion (45).

8. Furniture column according to claim 7, wherein the operating protrusion (45) has a tapered shape.

9. Furniture column according to anyone of the preceding claims, wherein at least one sensor (4) is arranged such that, in the case of a collision, a compression force acts onto the force-sensitive sensor (41).

10. Furniture column according to anyone of the preceding claims, wherein at least one sensor (4) is arranged such that, in the case of a collision, a tensile force acts onto the force-sensitive sensor (41).

11. Furniture column according to anyone of the preceding claims, wherein at least one of the sensors (4) is pre-applied with a compression force in a state without collision.

12. Method for controlling the automatic motion of the movable portion in a furniture column according to anyone of the preceding claims, comprising the steps:
- measuring the resistance of the force-sensitive sensor;
- detecting a compression force onto the force-sensitive sensor in the sensor in the case of a collision of the furniture with an obstacle;
- transmitting a collision signal to the control device;
- stopping the motion of the movable portion by the control device.

13. Method for controlling the automatic motion of the movable portion according to claim 12, the method comprising the step:
- inverting the direction of motion of the movable portion for a certain time and/or distance after the detection of a collision.

14. Furniture with at least one furniture column according to anyone of the claims 1 to 11.

## Revendications

1. Colonne pour meuble comprenant au moins une partie (1, 2, 31) pouvant être déplacée de manière motorisée, laquelle est mobile par rapport au reste du meuble, présentant : un dispositif servant à identifier des collisions de la partie mobile (1, 2, 31) avec des obstacles, un mécanisme de poussée automatique qui est adapté pour déplacer la partie mobile, un système de commande qui est adapté pour commander le mécanisme de poussée automatique, et au moins un capteur (4) qui est adapté pour détecter une collision avec un obstacle lors du déplacement de la partie mobile (1, 2, 31) et pour communiquer cette dernière à la commande, **caractérisée en ce que** l'au moins un capteur présente un capteur sensible à la force (41), un signal de commande pouvant être généré en fonction d'une valeur de conductivité du capteur sensible à la force, dans laquelle
le capteur sensible à la force présente au moins une couche conductrice et une matrice constituée d'un matériau conducteur et d'un matériau non conducteur.

2. Colonne pour meuble selon la revendication 1, dans laquelle le capteur sensible à la force est réalisé de telle manière que la conductivité du capteur sensible à la force se comporte de manière proportionnelle à une force de pression agissant sur le capteur sensible à la force.

3. Colonne pour meuble selon la revendication 1, dans laquelle le capteur sensible à la force est disposé de manière axiale au-dessus du moteur (5).

4. Colonne pour meuble selon l'une quelconque des revendications précédentes, dans laquelle un élément d'actionnement est prévu dans le champ d'action du capteur sensible à la force, au niveau du meuble.

5. Colonne pour meuble selon la revendication 4, dans laquelle l'élément d'actionnement (43) présente un matériau en mousse et/ou un élastomère.

6. Colonne pour meuble selon la revendication 5, dans laquelle le matériau en mousse et/ou l'élastomère peuvent être injectés.

7. Colonne pour meuble selon l'une quelconque des revendications 4 à 6, dans laquelle l'élément d'actionnement (43) présente une partie d'actionnement faisant saillie (45).

8. Colonne pour meuble selon la revendication 7, dans laquelle la partie d'actionnement faisant saillie (45) présente une forme conique.

9. Colonne pour meuble selon l'une quelconque des revendications précédentes, dans laquelle au moins un capteur (4) est disposé de telle manière que, dans le cas d'une collision, une force de pression agit sur le capteur sensible à la force (41).

10. Colonne pour meuble selon l'une quelconque des revendications précédentes, dans laquelle au moins un capteur (4) est disposé de telle manière que dans le cas d'une collision, une force de traction agit sur le capteur sensible à la force (41).

11. Colonne pour meuble selon l'une quelconque des revendications précédentes, dans laquelle au moins un des capteurs (4) est soumis au préalable à l'action d'une force de pression dans un état sans collision.

12. Procédé servant à commander le déplacement automatique de la partie mobile dans une colonne pour meuble selon l'une quelconque des revendications précédentes, qui présente les étapes suivantes consistant à :
- mesurer la résistance du capteur sensible à la force ;
- détecter une force de pression agissant sur le capteur sensible à la force dans le capteur dans le cas d'une collision du meuble avec un obstacle ;
- envoyer un signal de collision au système de commande ;
- bloquer le déplacement de la partie mobile par le système de commande.

13. Procédé servant à commander le déplacement automatique de la partie mobile selon la revendication 12, lequel présente l'étape suivante consistant à :
- inverser la direction de déplacement de la partie mobile pour une durée déterminée et/ou pour un trajet après la détection d'une collision.

14. Meuble comprenant au moins une colonne pour meuble selon l'une quelconque des revendications 1 à 11.
